# EUROPEAN PATENT APPLICATION

(11) **EP 2 806 514 A1**
(43) Date of publication of application: **26.11.2014**
(21) Application number: 12865966.1
(22) Date of filing: 21.12.2012
(51) Int. Cl.: H02G 3/04, B60K 7/00, B60R 16/02, B60K 1/00, B60L 11/18

(54) **STRUCTURE FOR PROTECTING POWER CABLE**

(30) Priority: 20.01.2012 JP 2012009954
(71) Applicant: NTN Corporation, Osaka-shi, Osaka 550-0003 (JP)
(72) Inventor: GOTO, Tomomi, x (JP); YUKISHIMA, Ryou, x (JP)
(74) Representative: Bockhorni & Kollegen
(86) International application number: PCT/JP2012/083246
(87) International publication number: WO 2013/108546

(57) **Abstract**

A power line (51) provided to a vehicle that drives a wheel assembly (21) by a motor (12) and connected to the motor (12) so as to be exposed outside the vehicle body (41) is covered with a protective member (52) which has mesh-type ventilating opening.

## Description

### Technical Field

This invention relates to protection of a power line that is used to supply electric power to a motor to drive wheel assemblies.

### Background Art

Recent rising oil prices and energy saving requirements have been boosting the demand for hybrid vehicles and electric vehicles. To meet this demand, motors are more often adopted as an alternative power source of vehicle engines. A motor is, for example, disposed outside the vehicle body as an in-wheel motor driving device placed in the interior space of a wheel of a wheel assembly. Alternatively, a motor is disposed at the bottom of the vehicle body and is drivingly coupled to wheel assemblies with a constant-velocity joint. Since the motors are disposed near road surfaces as described above, foreign matter, such as pebbles, may come flying from outside the vehicle body and the airborne objects may hit the motors. Especially, power lines that connect a motor and an inverter are vulnerable to such airborne objects or pebbles.

In order to protect power lines connected with a motor, for example, a structure as disclosed in Japanese Unexamined Patent Publication No. 2000-344026 (PTL 1) has been conventionally known. The structure described in PTL 1 has a part protection chamber that is defined between an upper floor panel and a lower battery frame at a lower area of the vehicle body and extends in the longitudinal direction of the vehicle body, and the part protection chamber accommodates wires and tubular parts routed therein. The wires and tubular parts are protected in the part protection chamber from chippings and splash.

### Citation List

### Patent Literature

PTL1: Japanese Unexamined Patent Publication No. 2000-344026

### Summary of Invention

### Technical Problem

However, the above-described structure has the following problems. First, the protected wires and tubular parts are restricted to be routed only on the battery frame, in other words, the wires and tubular parts routed on the areas other than the battery frame and the wires and tubular parts routed below the battery frame cannot be protected. Especially, it is impossible to apply the aforementioned structure to types of motors disposed adjacent to wheel assemblies, like an in-wheel motor driving device.

Second, if the motor for driving a wheel assembly operates under overload conditions, an excessive amount of current sometimes may flow continuously through the power line, which is used to supply electric power to the motor, for a long time. The excessive current may raise the temperature of the power line in some blocked areas between the floor panel and battery frame to high temperatures beyond the normal temperature range. Such high temperatures may damage the resin protective layer coating the power line for insulation.

The present invention has been made to solve the aforementioned problems and has an object to provide a power line protection structure that can be freely installed without routing restrictions on power lines and also can suppress the temperature rise of the power lines.

### Solution to Problem

As a precondition, the power line protection structure of the present invention, which has been made to achieve the object, is provided to a vehicle configured to drive a wheel assembly by a motor. The power line protection structure includes a power line connected to the motor and exposed outside the vehicle body, and a protective member having a ventilating opening and covering the power line.

According to the present invention, the protective member covering the power line can protect the power line from airborne objects, such as pebbles and foreign matter. In addition, the ventilating opening of the protective member according to the present invention can cool the power line with outside air. Therefore, the temperature rise of the power line can be suppressed.

The power line covered with the protective member can be anything as long as it is exposed outside the vehicle body. For example, the power line may be a power line extending from an in-wheel motor driving device to the vehicle body. Alternatively, in a vehicle including a sub frame mounted on the vehicle body and a motor supported by the sub frame, the sub frame being a skeletal structure composed of a plurality of frame members, the power line may be a power line extending from the motor and exposed outside the vehicle body from between the frame members.

It is preferable for the protective member to have the shape extending along the power line and, for example, the shape of a tube or a halved tube, and the cross sectional shape of the protective member is not particularly limited. The protective member may cover a plurality of the power lines individually, or may cover the plurality of the power lines all together, and also may cover signal lines extending from the motor all together with the power lines.

The ventilating opening may be composed of multiple small holes formed in the protective member, may be composed of a plurality of long holes formed in the protective member, or may be a long narrow opening formed on one side of the protective member by shaping the protective member into a halved tube with a U shaped or a C shaped cross section. Thus, the shape of the ventilating opening is not particularly limited.

In an embodiment of the present invention, the protective member is a spiral wire member winding around the power line. According to the embodiment, ventilating openings are formed between the neighboring wire member parts of the wire member winding in spiral, thereby improving thermal dissipation. In another embodiment of the present invention, the protective member has a pair of side walls and a bottom wall connecting the side walls. According to the embodiment, the protective member is shaped into a groove opened between the side walls, and a ventilating opening formed opposite to the bottom wall ensures proper airflow at the upper side of the protective member. In addition, protective performance is increased on the bottom wall side. In yet another embodiment of the invention, the protective member is tubular. According to the embodiment, since the protective member covers the entire peripheral surface of the power line, the protective performance is improved.

The physical characteristics, such as flexibility and deformability, of the protective member are not particularly limited. In an embodiment, the protective member is made of a flexible and deformable material. According to the embodiment, the protective member can be bent with the power line. Even if the power line is so designed to be bent to connect with an in-wheel motor, the protective member can protect the power line. As the flexible and deformable material, resin including rubber, wire-woven mesh materials, spiral spring members and so on can be used. In another embodiment, the protective member may be made of a material that is not readily susceptible to elastic deformation, such as plastic and metal.

Although the structure of the protective member is not particularly limited, a protective member of an embodiment is mesh. According to the embodiment, the mesh openings enable ventilation of the protective member. Since the opening size of the mesh is small, the protective member can protect the power line from small airborne objects.

Although the material of the protective member is not particularly limited, resin can be used in an embodiment. According to the embodiment, weight and cost reduction can be achieved. In another embodiment, the protective member is made of light metal. According to the embodiment, the use of light metal, such as aluminum alloy and titanium, to form the protective member can provide a lightweight and robust protective member.

Such a light-metal protective member is excellent in electric conductivity and therefore is susceptible to electrolytic corrosion. To prevent electrolytic corrosion, the protective member in a preferred embodiment is covered with an insulating layer. According to the embodiment, the insulating layer can prevent the light-metal protective member from electrolytic corrosion.

### Advantageous Effects of Invention

As described above, the present invention can not only protect the power line from airborne objects, such as pebbles and foreign matter, by the protective member, but also can cool the power line with outside air. Consequently, the present invention can achieve greater durability of the power line, weight reduction involving the slimming down of the power line, and an increase in motor output.

### Brief Description of Drawings

FIG, 1 is a side view of a power line protection structure according to an embodiment of the present invention.
FIG. 2 is a side view of a power line protection structure according to a modification.
FIG. 3 is a side view of a power line protection structure according to another embodiment of the present invention.
FIG. 4 is a cross sectional view of the power line protection structure according to the embodiment.

### Description of Embodiments

Embodiments of the present invention will be described in detail below with reference to examples shown in the drawings.

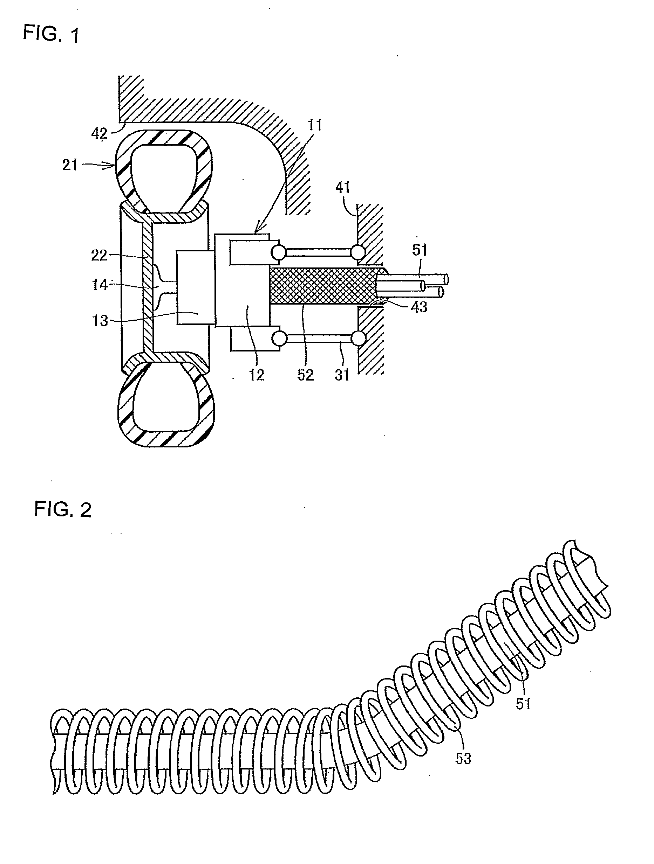

FIG. 1 is a side view of a power line protection structure according to an embodiment of the present invention, viewed from the front or the rear of a vehicle body. In this embodiment, an in-wheel motor driving device 11 and a wheel assembly 21 are disposed in a housing 42 formed in the vehicle body. The in-wheel motor driving device 11 equivalently functioning as a motor is disposed in an interior space of a wheel 22 of the wheel assembly 21 arranged outside the vehicle body to directly drive the wheel assembly 21. The in-wheel motor driving device 11 includes a motor unit 12, a speed reduction unit 13, and a wheel hub 14. The motor unit 12, speed reduction unit 13, and wheel hub 14 are coaxially aligned in this order. The speed reduction unit 13 reduces the output rotational speed of the motor unit 12 and transmits the reduced rotation to the wheel hub. The wheel hub 14 is fixedly coupled to the wheel 22 to rotate the wheel 22.

The in-wheel motor driving device 11 is attached to the vehicle body 41 with suspensions 31. The in-wheel motor driving device 11 and wheel assembly 21 are configured to be swingable by the suspension 31 in the vertical direction with respect to the vehicle body 41. In addition, the in-wheel motor driving device 11 is connected to power lines 51 extending from an inverter, not illustrated in the drawings, mounted on the vehicle body 41. Through the power lines, the in-wheel motor driving device 11 receives electric power from the inverter. In this embodiment, the motor unit 12 is a three-phase alternating current motor, and therefore the in-wheel motor driving device 11 is connected with three power lines 51.

The three power lines 51 are configured to extend outwardly from the vehicle body 41 to connect to the in-wheel motor driving device 11 and resultantly are exposed outside the vehicle body 41. The exposed parts of the power lines 51 are laid in a bundle in a long tubular protective member 52. The protective member 52 that is made of resin mesh is flexible and deformable. The protective member 52 has an end secured to a casing of the in-wheel motor driving device 11. The other end of the protective member 52 is inserted deeper into an access hole 43 formed in the vehicle body 41, and the length of the protective member 52 is set to be sufficiently longer than the exposed parts of the power lines 51 from the in-wheel motor driving device 11 to the vehicle body 41. Even if the swinging of the in-wheel motor driving device 11 causes the protective member 52 to bend, the other end of the protective member 52 does not come out of the access hole 43.

According to this embodiment, since the tubular protective member 52 is made of resin mesh, the protective member 52 has a large number of ventilating openings through which air passes between the inner peripheral surface and the outer peripheral surface thereof. Therefore, the outside air can enter and exit from the protective member 52 to cool the power lines 51 while the vehicle is running. In addition, the tubular protective member 52 can absorb and mitigate the shock of foreign matter flying from various directions. Furthermore, the protective member 52 made of a flexible and deformable material can be bent with the swinging of the in-wheel motor driving device 11.

The tubular protective member 52 may be a mesh hose made of metal, such as stainless. In this case, it is preferable to coat the protective member 52 with a resin layer. The resin layer can prevent the protective member 52 from electrolytic corrosion. Although the three power lines are bound by a single protective member 52, there is no problem to protect the power lines 51 individually with protective members 52, though it is not shown in the drawings.

Next, a modification of the embodiment will be described. FIG. 2 is a side view of a power line protection structure according to the modification. A protective member 53 is a spiral wire member winding around a power line 51. The protective member 53 is flexible and deformable like a coil spring.

According to the modification, since the protective member 53 is a spiral wire member, ventilating openings are formed between the neighboring wire member parts. Therefore, the outside air can enter and exit from the protective member 53 to cool the power line 51 while the vehicle is running. In addition, airborne foreign matter, such as pebbles, flying to the power line 51 is blocked by the protective member 53. Thus, the power line 51 can be protected from the shock of foreign matter. Furthermore, the protective member 53 made of a flexible and deformable material can be bent with the swinging of the in-wheel motor driving device 11. The protective member 53 can be configured to cover an individual power line 51; however, though it is not illustrated in the drawings, the protective member 53 can be configured to cover a plurality of power lines all together.

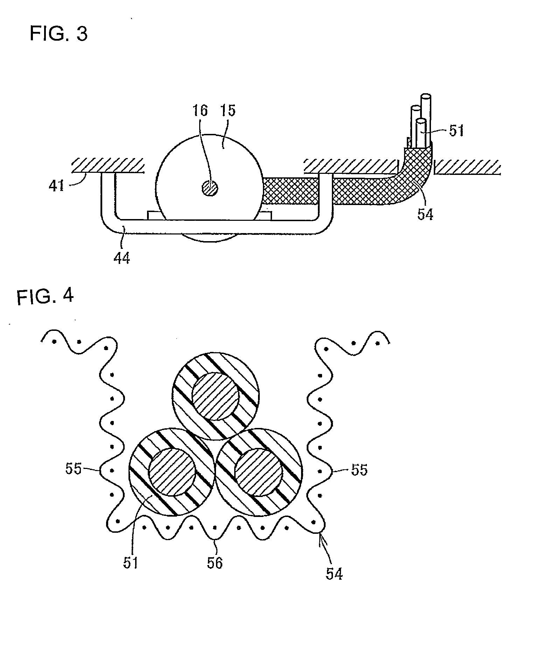

Next, another embodiment of the present invention will be described. FIG. 3 is a side view of a power line protection structure according to the embodiment of the invention, when viewed from outside of a vehicle body in the width direction. FIG. 4 is a cross sectional view of the power line protection structure according to the embodiment. A sub frame 44 is fixedly attached to a vehicle body 41. The sub frame 44 is made from a plurality of pipes. The sub frame 44 supports a motor 15. A motor output shaft 16 of the motor 15 is coupled to a wheel assembly with a constant-velocity joint, not illustrated, to drive the wheel assembly. The motor 15 is connected with ends of power lines 51. The other ends of the power lines 51 extend to the interior of the vehicle body 41 to connect with an inverter not illustrated.

Since the sub frame 44 includes a plurality of pipes, the periphery of the motor 15 is exposed outside the vehicle body. Then, exposed parts of the power lines 51 are laid in a bundle in a protective member 54. The protective member 54 is a long-shaped member having a pair of side walls 55 and a bottom wall 56 connecting the side walls 55. As shown in FIG. 4, the protective member 54 has the side walls 55 on both sides, the bottom wall 56 at the lower side, and an opening at the upper side, and is in the shape of a groove in cross section. Three power lines 51 are accommodated in the protective member 54. The side walls 55 and bottom wall 56 are made of resin mesh.

The protective member 54 has an end secured to a casing of the motor 15. The other end of the protective member 54 is secured to the vehicle body 41.

According to the embodiment shown in FIG. 3, the protective member 54 has an opening at the upper side in cross section as shown in FIG. 4, and the upper opening functions as a ventilating opening. In addition, since the protective member 54 is made of resin mesh, the protective member 54 has a large number of ventilating openings through which air passes between the inner space and outer space thereof. Therefore, the outside air can enter and exit from the protective member 54 to cool the power lines 51 while the vehicle is running. Furthermore, since the side walls 55 and bottom wall 56 of the protective member 54 cover around the power lines 51, can absorb and mitigate the shock from airborne foreign matter, such as pebbles, flying to the power lines 51.

The side walls 55 and bottom wall 56 can be made of a plate-like material instead of mesh, because even if the protective member 54 is formed with a plate, its upper opening can provide ventilation. In the case where the protective member 54 is formed with a plate, the plate material may be resin or light metal, such as aluminum, titanium, and other types of alloys. These materials can decrease the weight of the protective member as well as increase the durability.

In the case where the protective member 54 with an upper opening is formed with metal mesh, like stainless mesh, or a light-metal plate, it is preferable to coat the protective member 54 with a resin layer. The resin layer can prevent the protective member 54 from electrolytic corrosion.

As described above, the protective member for the power lines 51 can be in a spiral shape, in the shape of a groove with an upper opening, or in a tubular shape. The tubular protective member is made of a mesh material. The protective member with an upper opening is made of a mesh material or a plate material. The mesh material may be resin, or light metal, such as aluminum and titanium. The metal protective member is preferably coated with a resin layer.

The protective members 52, 53, 54 are provided for power lines 51 exposed outside the vehicle body. The aforementioned embodiments are prepared for power lines 51 connected with an in-wheel motor driving device 11 and a motor 15 supported by a sub frame 44; however, the motors with which the power lines exposed outside the vehicle body are connected are not limited to these motors. The protective members 52, 53, 54 can also cover signal lines extending from the motor to the vehicle body.

The foregoing has described the embodiments of the present invention by referring to the drawings. However, the invention should not be limited to the illustrated embodiments. It should be appreciated that various modifications and changes can be made to the illustrated embodiments within the scope of the appended claims and their equivalents.

### Industrial applicability

The power line protection structure according to the present invention is advantageously used in electric vehicles and hybrid vehicles.

### Reference Signs List

11 in-wheel motor drive device
12 motor unit
13 speed reduction unit
14 wheel hub
15 motor
16 motor output shaft
21 wheel assembly
22 wheel
31 suspension
41 vehicle body
44 sub frame
51 power line
52, 53, 54 protective member
55 side wall
56 bottom wall

## Claims

1. A power line protection structure provided on a vehicle that drives a wheel assembly by a motor, comprising:
a power line connected to the motor and exposed outside a vehicle body; and
a protective member having a ventilating opening and covering the power line.

2. The power line protection structure according to claim 1, wherein
the protective member is a spiral wire winding around the power line.

3. The power line protection structure according to claim 1, wherein
the protective member includes a pair of side walls and a bottom wall connecting the side walls.

4. The power line protection structure according to claim 1, wherein the protective member is tubular.

5. The power line protection structure according to claim 2 or 4, wherein
the protective member is made of a flexible and deformable material.

6. The power line protection structure according to claim 3 or 4, wherein
the protective member is mesh.

7. The power line protection structure according to any of claims 1 to 6, wherein
the protective member is made of light metal.

8. The power line protection structure according to claim 7, wherein
the protective member is coated with an insulating layer.
